# EUROPÄISCHE PATENTSCHRIFT

(11) **EP 4 314 540 B1**
(45) Veröffentlichungstag und Bekanntmachung des Hinweises auf die Patenterteilung: **08.04.2026**
(21) Anmeldenummer: 22706286.6
(22) Anmeldetag: 16.02.2022
(51) Int. Cl.: F02M 61/06, F02M 61/12, F02M 61/04

(54) **EINSPRITZDÜSE, KRAFTSTOFFINJEKTOR MIT EINSPRITZDÜSE**
INJECTION NOZZLE, FUEL INJECTOR HAVING INJECTION NOZZLE
BUSE D'INJECTION, INJECTEUR DE CARBURANT AYANT UNE BUSE D'INJECTION

(30) Priorität: 22.03.2021 DE 102021202732
(43) Veröffentlichungstag der Anmeldung: 07.02.2024
(73) Patentinhaber: Robert Bosch GmbH, 70442 Stuttgart (DE)
(72) Erfinder: LEUKART, Michael, 72144 Dusslingen (DE); NICOLAI, Ferdinand, 70192 Stuttgart (DE)
(86) Internationale Anmeldenummer: PCT/EP2022/053761
(87) Internationale Veröffentlichungsnummer: WO 2022/199947

(56) Entgegenhaltungen:
- EP-A1- 2 642 110
- DE-A1- 102018 208 780

## Beschreibung

Die Erfindung betrifft eine Einspritzdüse zum Einspritzen eines Fluids, insbesondere eines flüssigen oder gasförmigen Kraftstoffs. Darüber hinaus betrifft die Erfindung einen Kraftstoffinjektor mit einer erfindungsgemäßen Einspritzdüse.

### Stand der Technik

Im Stand der Technik werden Einspritzdüsen für flüssige und/oder gasförmige Kraftstoffe in den verschiedensten Ausführungsformen beschrieben. Sie umfassen in der Regel einen Düsenkörper sowie eine im Düsenkörper hubbeweglich aufgenommene Düsennadel, über deren Hubbewegungen im Düsenkörper ausgebildete Einspritzöffnungen steuerbar sind. Die Düsennadel ist dabei entlang ihrer Längsachse über im Düsenkörper ausgebildete Führungsflächen geführt. Die Führung soll ein symmetrisches Spritzbild sicherstellen sowie den Verschleiß im Bereich eines Dichtsitzes für die Düsennadel verringern. Ausreichend dimensionierte Längsnuten oder Anschliffe im Führungsbereich der Düsennadel sorgen dafür, dass beim Öffnen der Düsennadel genügend Fluid mit hohem Druck bis in den Sitzbereich und von dort über ein Sackloch zu den Spritzlöchern gelangen kann.

Um die Düsennadel möglichst präzise zu führen, sind oftmals längere und/oder mehrere Führungen im Inneren des Düsenkörpers sowie an der Düsennadel vorgesehen. Bei mehreren Führungen ist in der Regel eine möglichst nah am Dichtsitz positioniert, um die Düsennadel in Bezug auf den Dichtsitz zu zentrieren. Eine solche Düsennadel ist beispielsweise aus DE 10 2012 211 156 A1 bekannt. Sogenannte sitznahe Führungen sind jedoch fertigungstechnisch schwer zu realisieren, so dass trotz Führung ein asymmetrisches Gleiten der Düsennadel entlang des Dichtsitzes beim Schließen nicht immer vermieden werden kann. Hinzu kommt, dass es mit zunehmendem Einspritzdruck zu einem Weiten der Führungsspalte kommen kann, so dass diese ihre Führungseigenschaften einbüßen oder verlieren.

Aus der EP 2 642 110 A1 ist darüber hinaus ein Brennstoffeinspritzventil bekannt, das einen zylindrischen Düsenkörper mit einer darin längsverschieblichen Düsennadel aufweist. Die Düsennadel ist an ihrem Ende mit einer die Einspritzöffnungen steuernden Hülse verbunden, die an der Außenseite des Düsenkörpers geführt ist.

Neben der Führung der Düsennadel muss die Fluidversorgung der Spritzlöcher gewährleistet sein. Da der Strömungspfad des Fluids über denselben Bereich oder sogar direkt über die Führungsbereiche führt, muss hier ein Kompromiss zwischen der vom Fluid durchströmbaren Querschnittsfläche und den Führungseigenschaften gefunden werden. Dabei muss die durchströmbare Querschnittsfläche in den Führungsbereichen derart dimensioniert werden, dass keine zusätzliche Drosselstelle ausgebildet wird. Nach Möglichkeit sollen Drosselstellen nur vom Dichtsitz beim Öffnen der Düsennadel sowie von den Spritzlöchern bei Vollhub gebildet werden.

Die vorliegende Erfindung ist mit der Aufgabe befasst, eine Einspritzdüse mit einer verbesserten Führung für eine hubbewegliche Düsennadel anzugeben. Die Führung soll zudem einen möglichst geringen Einfluss auf die Fluidströmung durch die Einspritzdüse haben.

Zur Lösung der Aufgabe wird die Einspritzdüse mit den Merkmalen des Anspruchs 1 vorgeschlagen. Vorteilhafte Weiterbildungen der Erfindung sind den Unteransprüchen zu entnehmen. Darüber hinaus wird ein Kraftstoffinjektor mit einer erfindungsgemäßen Einspritzdüse angegeben.

### Offenbarung der Erfindung

Die zum Einspritzen eines Fluids, insbesondere eines flüssigen oder gasförmigen Kraftstoffs, vorgeschlagene Einspritzdüse umfasst einen Düsenkörper, der zumindest abschnittsweise hohlzylinderförmig ausgeführt ist und einen Dichtsitz ausbildet, über den ein Strömungspfad für das einzuspritzende Fluid führt, eine Düsennadel, die im Düsenkörper hubbeweglich aufgenommen ist und eine mit dem Dichtsitz zusammenwirkende Dichtfläche aufweist, und ein Führungselement, das mit der Düsennadel fest verbunden und über eine außenliegende Führung des Düsenkörpers geführt ist.

Dadurch, dass das Führungselement mit der Düsennadel fest verbunden ist, wird über die außenliegende Führung des Düsenkörpers zugleich die Düsennadel geführt. Die Führung der Düsennadel wird somit von innen nach außen verlegt. Dies ermöglicht die Realisierung einer Führung auf Höhe des Dichtsitzes oder zumindest in direkter Nähe zum Dichtsitz, so dass die Düsennadel optimal geführt ist. Ein asymmetrisches Gleiten der Düsennadel über den Dichtsitz beim Schließen wird somit verhindert, was wiederum zur Folge hat, dass sich der Verschleiß im Bereich des Dichtsitzes verringert.

Die sitznahe Führung ermöglicht zudem den Wegfall weiterer Führungen im Inneren des Düsenkörpers, so dass für das hindurchströmende Fluid ein größerer Strömungsquerschnitt zur Verfügung steht. Auf diese Weise wird die Fluidströmung in Richtung des Dichtsitzes verbessert. Hinzu kommt, dass es mit zunehmendem Einspritzdruck zu einem Verengen der Führungsspalte kommen kann, so dass diese mit zunehmendem Einspritzdruck ihre Führungseigenschaften verbessern.

Durch die nach außen verlegte Führung der Düsennadel wird eine räumliche Trennung von Strömungspfad und Führung erreicht. Das heißt, dass die Führung nicht mehr von dem Fluid durchströmt wird. Dies ermöglicht eine Gestaltung der Führung lediglich nach Führungseigenschaften, so dass sie einfacher auszulegen ist. Die außenliegende Anordnung der Führung hat zudem fertigungstechnische Vorteile, da der Bereich leicht zugänglich ist. Ferner können aufwendig gefertigte Hinterschnitte und/oder Freilegungen entfallen, die zur Ausbildung einer Führung im Inneren des Düsenkörpers üblich sind.

Bevorzugt sind die Führung und der Strömungspfad durch den Düsenkörper räumlich getrennt. Das heißt, dass die Düsennadel weiterhin über den Düsenkörper geführt ist und der Düsenkörper den Strömungspfad begrenzt, jedoch räumlich getrennt voneinander, so dass die Führung den Strömungspfad nicht einschränkt.

Ferner bevorzugt bildet einen Außenumfangsbereich des Düsenkörpers die außenliegende Führung aus. Hierbei kann es sich insbesondere um einen Endabschnitt des Düsenkörpers handeln, der hierzu entsprechend bearbeitet, beispielsweise feingeschliffen, wird. Das Führungselement umgibt diesen Ausrufungsbereich des Düsenkörpers. Das Führungselement ist hierzu bevorzugt zumindest abschnittsweise hohlzylinderförmig ausgeführt.

Weiterhin bevorzugt weist das Führungselement eine zentrale Ausnehmung auf, in der ein Endabschnitt der Düsennadel aufgenommen ist. Auf diese Weise kann eine feste Verbindung des Führungselements mit der Düsennadel hergestellt werden. Die Düsennadel und das Führungselement bilden somit eine Baueinheit aus, die über die außenliegende Führung des Düsenkörpers geführt ist. Die gebaute Ausführung besitzt den Vorteil, dass die Düsennadel und das Führungselement separat gefertigt werden können. Zugleich wird die Montage vereinfacht, da das Führungselement auch erst nach dem Einsetzen der Düsennadel in den Düsenkörper mit der Düsennadel verbunden werden kann. Diese Vorgehensweise besitzt den Vorteil, dass etwaige Fertigungstoleranzen im Bereich des Dichtsitzes während der Verbindung des Führungselements mit der Düsennadel noch ausgeglichen werden können. Die Verbindung des Führungselements mit der Düsennadel kann beispielsweise über eine Schweißverbindung hergestellt werden.

Gemäß dem Gegenstand des Anspruchs 1 wird angegeben, dass das Führungselement einen Strömungsraum begrenzt und mindestens eine Öffnung zum Ausleiten des Fluids aus dem Strömungsraum aufweist. In diesem Fall kann das Führungselement zugleich dazu eingesetzt werden, das Spritzbild zu formen. Denn die mindestens eine Öffnung kann beliebig gestaltet werden. Mit Hilfe des Führungselements kann somit zugleich eine optimierte Strahlformung und/oder Strahllenkung erzielt werden.

Da der durch das Führungselement begrenzte Strömungsraum deutlich größer als beispielsweise ein klassisches Sackloch im Inneren des Düsenkörpers ist, können mit Hilfe der vorgeschlagenen Einspritzdüse auch deutlich höhere Durchflüsse realisiert werden. Dies setzt voraus, dass der Öffnungsquerschnitt der mindestens einen Öffnung zum Ausleiten des Fluids entsprechend dimensioniert ist, was zugleich verhindert, dass es zur Ausbildung einer dem Dichtsitz nachgelagerten Drosselstelle kommt.

Des Weiteren bevorzugt ist bzw. sind der Dichtsitz und/oder die mit dem Dichtsitz zusammenwirkende Dichtfläche der Düsennadel konisch geformt. Die konische Form ermöglicht eine Selbstzentrierung der Düsennadel in Bezug auf den Dichtsitz beim Schließen, so dass die Einspritzdüse sicher schließt. Sofern sowohl der Dichtsitz als auch die Dichtfläche der Düsennadel konisch geformt sind, weisen beide bevorzugt einen unterschiedlichen Konuswinkel auf. Vorzugsweise ist der Konuswinkel der Dichtfläche der Düsennadel kleiner als der Konuswinkel des Dichtsitzes. Die Düsennadel gelangt in diesem Fall über eine umlaufende kreisförmige Dichtkontur zur Anlage am Dichtsitz, was die Dichtheit des Dichtsitzes weiter erhöht.

Die Dichtfläche ist vorzugsweise an einem Teil oder Abschnitt der Düsennadel ausgebildet, das bzw. der einen vergrößerten Außendurchmesser aufweist und dem geführten Endabschnitt vorgelagert ist. Dies ermöglicht einen vergleichsweise großen Sitzdurchmesser und damit hohe Durchflüsse.

Gemäß einer bevorzugten Ausführungsform der Erfindung öffnet die Düsennadel nach außen. Diese Ausführungsform besitzt den Vorteil, dass der Dichtsitz und die Führung in einer Aufspannung von einer Seite aus gefertigt werden können. Dies erhöht die Präzision der Ausrichtung des Düsensitzes zur Führung. Zudem kann die Führung auf Höhe des Dichtsitzes angeordnet werden.

Alternativ wird vorgeschlagen, dass die Düsennadel nach innen öffnet. Das Führungselement kann in diesem Fall erst nach dem Einsetzen der Düsennadel in den Düsenkörper mit der Düsennadel fest verbunden werden. Hier erweist sich die gebaute Ausführung der Düsennadel als besonders vorteilhaft.

Darüber hinaus wird ein Kraftstoffinjektor mit einer erfindungsgemäßen Einspritzdüse vorgeschlagen. Da die Einspritzdüse zum Einspritzen von flüssigen und gasförmigen Kraftstoffen geeignet ist, kann es sich bei dem Kraftstoffinjektor beispielsweise um einen Dieselinjektor für ein Common-Rail-Einspritzsystem oder einen Gasinjektor handeln. Da Gasinjektoren in der Regel hohe Volumenströme ermöglichen müssen, kommen hier die Vorteile der erfindungsgemäßen Einspritzdüse besonders gut zur Geltung.

Bevorzugte Ausführungsformen der Erfindung werden nachfolgend anhand der beigefügten Zeichnungen näher erläutert. Diese zeigen:
Fig. 1 einen schematischen Längsschnitt durch eine erste erfindungsgemäße Einspritzdüse und
Fig. 2 einen schematischen Längsschnitt durch eine zweite erfindungsgemäße Einspritzdüse.

### Ausführliche Beschreibung der Zeichnungen

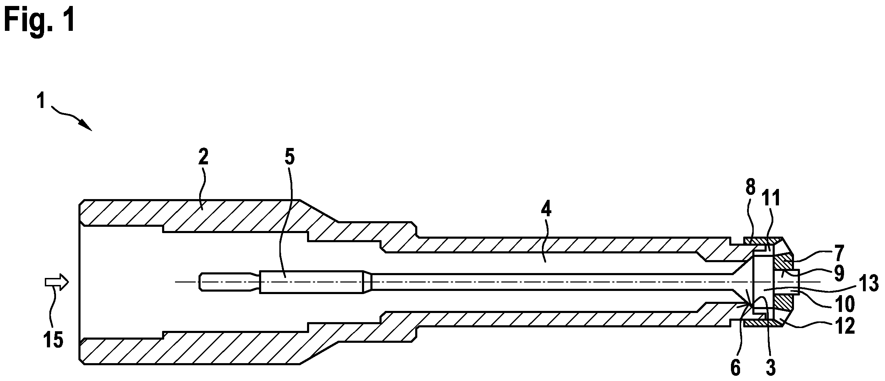

Der Figur 1 ist eine erste bevorzugte Ausführungsform einer erfindungsgemäßen Einspritzdüse 1 zu entnehmen. Diese umfasst einen Düsenkörper 2, in dem eine Düsennadel 5 beweglich aufgenommen ist. Der Düsenkörpers 2 und die Düsennadel 5 begrenzen einen Strömungspfad 4 für ein einzuspritzendes Fluid. Der Strömungspfad 4 führt über einen Dichtsitz 3, der durch den Düsenkörpers 2 ausgebildet wird. Der Dichtsitz 3 ist vorliegend konisch geformt und nach außen orientiert. In einem Abschnitt 13 mit vergrößertem Außendurchmesser weist die Düsennadel 5 eine konisch geformte Dichtfläche 6 auf, die mit dem Dichtsitz 3 zusammenwirkt. Die Dichtfläche 6 ist dabei zum Düsenkörpers 2 hin orientiert. Die Düsennadel 5 öffnet demnach nach außen (siehe Pfeil 15).

Um die Düsennadel 5 zu führen, weist der Düsenkörpers 2 in einem Außenumfangsbereich eine Führung 8 auf. Die Führung 8 ist von einem Führungselement 7 umgeben, das mit der Düsennadel 5 fest verbunden ist. In dem Führungselement 7 ist hierzu eine zentrale Ausnehmung 9 vorgesehen, in der ein zapfenartiger Endabschnitt 10 der Düsennadel 5 aufgenommen ist. Das Führungselement 7 begrenzt einen dem Dichtsitz 3 nachgelagerten Strömungsraum 11, in den das einzuspritzende Fluid bei geöffneter Düsennadel 5 strömt. Um das Fluid aus dem Strömungsraum 11 auszuleiten, weist das Führungselement 7 Öffnungen 12 auf, die derart geformt sind, dass zugleich eine Strömungslenkung erzielt wird.

Bei der in der Figur 1 dargestellten Einspritzdüse 1 ist die Düsennadel 5 außen am Düsenkörper 2 geführt, so dass eine sitznahe Führung im Inneren des Düsenkörpers 2 entbehrlich ist. Der Strömungsquerschnitt im Strömungspfad 4 kann somit maximal ausgelegt werden. Insbesondere wird die Ausbildung einer Drosselstelle vermieden. Da die außen am Düsenkörpers 2 ausgebildete Führung 8 außerhalb des Strömungspfads 4 angeordnet ist, kann sie hinsichtlich ihrer Führungseigenschaften optimiert werden. Ferner kann die Führung 8 auf Höhe des Dichtsitzes 3 angeordnet werden, so dass die Düsennadel 5 optimal geführt ist.

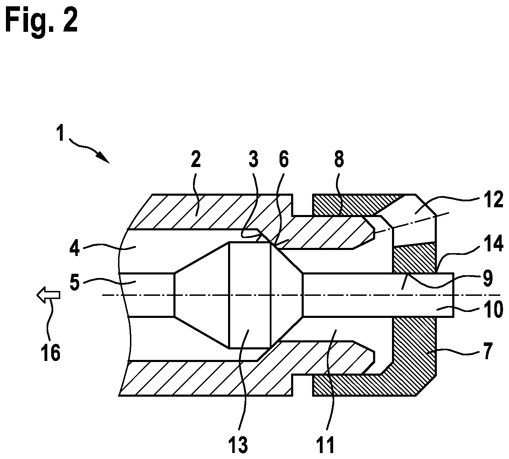

Eine weitere bevorzugte Ausführungsform einer erfindungsgemäßen Einspritzdüse 1 ist in der Figur 2 dargestellt. Diese unterscheidet sich von der Ausführungsform der Figur 1 insbesondere dadurch, dass die Düsennadel 5 nach innen öffnet (siehe Pfeil 16).

Der Dichtsitz 3 des Düsenkörpers 2 ist demzufolge nach innen orientiert. Die mit dem Dichtsitz 3 zusammenwirkende Dichtfläche 6 der Düsennadel 5 weist nach außen. Die Düsennadel 5 ist auch hier mit einem Führungselement 7 verbunden, das eine außenumfangseitig am Düsenkörpers ausgebildete Führung 8 umgreift. Die Verbindung ist vorliegend über eine Schweißverbindung 14 zwischen der Düsennadel 5 und dem Führungselement 7 im Bereich eines in eine Ausnehmung 9 des Führungselements 7 eingreifenden zapfenförmigen Endabschnitts 10 der Düsennadel 5 hergestellt.

Die zuvor beschriebenen Vorteile der erfindungsgemäßen Einspritzdüse 1 werden auch mit einer nach innen öffnenden Düsennadel 5 erreicht, so dass die Erfindung wahlweise mit einer außen und einer nach innen öffnenden Düsennadel 5 realisierbar ist.

## Patentansprüche

1. Einspritzdüse (1) zum Einspritzen eines Fluids, insbesondere eines flüssigen oder gasförmigen Kraftstoffs, umfassend:
einen Düsenkörper (2), der zumindest abschnittsweise hohlzylinderförmig ausgeführt ist und einen Dichtsitz (3) ausbildet, über den ein Strömungspfad (4) für das einzuspritzende Fluid führt,
eine Düsennadel (5), die im Düsenkörper (2) hubbeweglich aufgenommen ist und eine mit dem Dichtsitz (3) zusammenwirkende Dichtfläche (6) aufweist, wobei die Düsennadel (5) fest mit einem Führungselement (7) verbunden ist, das über eine außenliegende Führung (8) des Düsenkörpers (2) geführt ist,
**dadurch gekennzeichnet,**
**dass** das Führungselement (7) einen Strömungsraum (11) begrenzt und
mindestens eine Öffnung (12) zum Ausleiten des Fluids aus dem Strömungsraum (11) aufweist.

2. Einspritzdüse (1) nach Anspruch 1,
**dadurch gekennzeichnet, dass** die Führung (8) und der Strömungspfad (4) durch den Düsenkörper (2) räumlich getrennt sind.

3. Einspritzdüse (1) nach Anspruch 1 oder 2,
**dadurch gekennzeichnet, dass** ein Außenumfangsbereich des Düsenkörpers (2) die außenliegende Führung (8) ausbildet und das Führungselement (7) den Außenumfangsbereich des Düsenkörpers (2) umgibt.

4. Einspritzdüse (1) nach einem der vorhergehenden Ansprüche,
**dadurch gekennzeichnet, dass** das Führungselement (7) eine zentrale Ausnehmung (9) aufweist, in der ein Endabschnitt (10) der Düsennadel (5) aufgenommen ist, der vorzugsweise zapfenartig ausgeführt ist.

5. Einspritzdüse (1) nach einem der vorhergehenden Ansprüche,
**dadurch gekennzeichnet, dass** der Dichtsitz (3) und/oder die mit dem Dichtsitz (3) zusammenwirkende Dichtfläche (6) konisch geformt ist bzw. sind.

6. Einspritzdüse (1) nach einem der vorhergehenden Ansprüche,
**dadurch gekennzeichnet, dass** die Dichtfläche (6) an einem Teil oder Abschnitt (13) der Düsennadel (5) ausgebildet ist, das bzw. der einen vergrößerten Außendurchmesser aufweist.

7. Einspritzdüse (1) nach einem der vorhergehenden Ansprüche,
**dadurch gekennzeichnet, dass** die Düsennadel (5) nach außen öffnet.

8. Einspritzdüse (1) nach einem der Ansprüche 1 bis 6,
**dadurch gekennzeichnet, dass** die Düsennadel (5) nach innen öffnet.

9. Kraftstoffinjektor mit einer Einspritzdüse (1) nach einem der vorhergehenden Ansprüche.

## Claims

1. Injection nozzle (1) for injecting a fluid, in particular a liquid or gaseous fuel, comprising:
a nozzle body (2) which is of at least sectionally hollow-cylindrical design and forms a sealing seat (3) via which a flow path (4) for the fluid to be injected leads,
a nozzle needle (5) which is received, such that it is able to perform stroke movements, in the nozzle body (2) and has a sealing surface (6) which interacts with the sealing seat (3), wherein the nozzle needle (5) is connected fixedly to a guide element (7) which is guided via an outer guide (8) of the nozzle body (2),
**characterized**
**in that** the guide element (7) delimits a flow space (11) and has at least one opening (12) for discharging the fluid from the flow space (11).

2. Injection nozzle (1) according to Claim 1,
**characterized in that** the guide (8) and the flow path (4) are separated spatially by the nozzle body (2).

3. Injection nozzle (1) according to Claim 1 or 2,
**characterized in that** an outer circumferential region of the nozzle body (2) forms the outer guide (8), and the guide element (7) surrounds the outer circumferential region of the nozzle body (2).

4. Injection nozzle (1) according to one of the preceding claims,
**characterized in that** the guide element (7) has a central cutout (9) in which an end portion (10) of the nozzle needle (5) is received, said end portion preferably being of peg-like design.

5. Injection nozzle (1) according to one of the preceding claims,
**characterized in that** the sealing seat (3) and/or the sealing surface (6) interacting with the sealing seat (3) are/is of conical shape.

6. Injection nozzle (1) according to one of the preceding claims,
**characterized in that** the sealing surface (6) is formed on a part or portion (13) of the nozzle needle (5) that has an enlarged outer diameter.

7. Injection nozzle (1) according to one of the preceding claims,
**characterized in that** the nozzle needle (5) opens outwardly.

8. Injection nozzle (1) according to one of Claims 1 to 6,
**characterized in that** the nozzle needle (5) opens inwardly.

9. Fuel injector having an injection nozzle (1) according to one of the preceding claims.

## Revendications

1. Buse d'injection (1) pour injecter un fluide, en particulier un combustible liquide ou gazeux, comprenant :
un corps de buse (2) réalisé au moins par sections en forme de cylindre creux et formant un siège d'étanchéité (3) par lequel passe un trajet d'écoulement (4) pour le fluide à injecter,
une aiguille de buse (5) logée dans le corps de buse (2) de manière mobile en course et présentant une surface d'étanchéité (6) coopérant avec le siège d'étanchéité (3), l'aiguille de buse (5) étant reliée de manière fixe à un élément de guidage (7) guidé par l'intermédiaire d'un guide extérieur (8) du corps de buse (2),
**caractérisée en ce que**
l'élément de guidage (7) délimite un espace d'écoulement (11) et présente au moins une ouverture (12) pour évacuer le fluide de l'espace d'écoulement (11).

2. Buse d'injection (1) selon la revendication 1,
**caractérisée en ce que** le guide (8) et le trajet d'écoulement (4) sont séparés spatialement par le corps de buse (2).

3. Buse d'injection (1) selon la revendication 1 ou 2,
**caractérisée en ce qu'**une zone périphérique extérieure du corps de buse (2) forme le guide extérieur (8) et l'élément de guidage (7) entoure la zone périphérique extérieure du corps de buse (2).

4. Buse d'injection (1) selon l'une des revendications précédentes,
**caractérisée en ce que** l'élément de guidage (7) présente un évidement centrai (9) dans lequel est logée une section d'extrémité (10) de l'aiguille de buse (5), de préférence réalisée en forme de tenon.

5. Buse d'injection (1) selon l'une des revendications précédentes,
**caractérisée en ce que** le siège d'étanchéité (3) et/ou la surface d'étanchéité (6) coopérant avec le siège d'étanchéité (3) sont de forme conique.

6. Buse d'injection (1) selon l'une des revendications précédentes,
**caractérisée en ce que** la surface d'étanchéité (6) est formée sur une partie ou une section (13) de l'aiguille de buse (5) qui présente un diamètre extérieur agrandi.

7. Buse d'injection (1) selon l'une des revendications précédentes,
**caractérisée en ce que** l'aiguille de buse (5) s'ouvre vers l'extérieur.

8. Buse d'injection (1) selon l'une des revendications 1 à 6,
**caractérisée en ce que** l'aiguille de buse (5) s'ouvre vers l'intérieur.

9. Injecteur de carburant avec une buse d'injection (1) selon l'une des revendications précédentes.
